# EUROPEAN PATENT APPLICATION

(11) **EP 1 864 747 A1**
(43) Date of publication of application: **12.12.2007**
(21) Application number: 06445039.8
(22) Date of filing: 07.06.2006
(51) Int. Cl.: B23K 20/12, B23K 37/02, B23K 37/04, B23K 101/06, B23K 101/18

(54) **System and method for frictional stir welding with means for supporting the workpiece during welding moving synchronously with the rotary tool relative to the workpiece**

(71) Applicant: ABB AB, 721 83 Västerås (SE)
(72) Inventor: Johansson, Görgen, 722 46 Västerås (SE)

(57) **Abstract**

The invention relates to a system (20) for friction stir welding of at least one work piece (30,31,32). The system (20) comprises a rotary tool (10) arranged to move relative to the work piece (30,31,32) along a weld path, and means (30) for supporting the work piece (30,31,32) during welding, which is arranged to move synchronously with the rotary tool (10) relative to the work piece (30,31,32). The invention also relates to a method of friction stir welding which such synchronous movement of a rotary tool (10) and means (30) for supporting the work piece (30,31,32) during welding.

## Description

### Field of the invention

The invention relates to a system for friction stir welding. The invention also relates to a method of friction stir welding.

### Background art

Friction Stir Welding (FSW) has been gaining an increased interest since it was first developed in the early 1990's. The FSW process is based on the principle of utilising a non-consumable rotating tool that generates friction heat and deforms the work pieces in order to form a joint while keeping the material in a solid state. Advantages of FSW, compared to conventional welding, such as gas metal arc welding and resistance spot welding, comprise a reduced distortion and shrinkage of the welded material, absence of need for a filling metal or a shielding gas and the ability to weld alloys which are not weldable by conventional welding techniques. Up to now, FSW has primary been used for welding aluminium based alloys but the process has also been successfully applied when joining other materials such as magnesium, copper, zinc, steel and titanium. FSW may also be used for joining work pieces of different materials, e.g. aluminium and steel, aluminium and copper as well as aluminium and magnesium.

FSW is a solid phase welding process, where heat is generated by the welding tool due to friction against the work pieces created by an adequate pressing force and rotational speed. The process should maintain the material in the welding zone at a temperature, which is high enough to plasticize the material, but low enough to avoid melting of the material. A temperature range around 80% to 90% of the material's melting temperature has been considered as a maximum.

During FSW, a rotational tool comprising a shoulder and a probe is moved along a weld path, which runs along the contact line between the work pieces to be welded together. This movement is sometimes referred to as the process movement. The work pieces are clamped together by means of a fixture. The shoulder comprises a surface, which contacts and is pressed by a comparatively great force against a surface of each work piece, which work piece surfaces extend along the contact line. The probe, which protrudes from the shoulder, is inserted between the work pieces. By rotating and moving the probe along the contact line, material from both or all work pieces is plasticized and transferred from the leading side of the probe to the trailing side. The plasticized material is confined between the work pieces by the shoulder, which is pressed against the work pieces. The volume containing plasticized material may be referred to as the weld zone. After the material has cooled off a high quality weld is achieved.

For generating a correct temperature in the weld zone it is of great importance that the shoulder is pressed against the work pieces with a sufficiently great force. It is also important that this pressing force may be controlled within comparatively narrow tolerances throughout the complete welding operation. Typically, the shoulder should be pressed against the work pieces with a force of above 3000 N and up to 10 000 N, depending on the type of material and the thickness of the work pieces and the weld zone. The heat generated during the welding process also depends on the rotational speed of the probe and the speed of the process movement, i.e. the speed by which the rotational tool is moved along the weld path in relation to the work pieces. The rotational speed is typically kept at around 2 000 rpm and the process movement speed at about 10 - 20 mm/s. The force required for the driving process movement depends on the pressing force and is typically about 1/10 of the pressing force.

Prior art apparatuses for carrying out FSW comprises milling machines and so called coordinate machines. At these types of conventional machines the work pieces are fixed to a support in the form of a backing bar and the rotary tool is linearly moved in two dimensions relative to the work pieces.

WO 2004/110703 describes an industrial robot at which the manipulator comprises a wrist specially arranged for carrying a rotary tool. This industrial robot may be advantageously used for FSW, in which case the rotary tool is a FSW rotary tool. The multiple degrees of freedom of the manipulator facilitate the creation of three-dimensional friction stir welds. During friction stir welding with the above mentioned robot, the work pieces are fixed to a stationary support.

### Summary of the invention

The system according to the invention is normally used for joining together two or more work pieces by friction stir welding. However, the system may also be used for creating a friction stir weld in a single work piece. In the following reference will be made to applications with both a single and a plurality of work pieces.

It is an object of the present invention to provide an improved system for friction stir welding.

This and other objects are achieved by a system for friction stir welding of at least one work piece, which system comprises the features described in claim 1. The system comprises a rotary tool and means for supporting the work piece during welding. The rotary tool is arranged to move relative to the work piece along a weld path. According to the invention the support means comprises a support member, which is arranged to move synchronously with the rotary tool relative to the work piece.

With the system according to the invention any stationary support for holding the work pieces may be greatly simplified or completely omitted. Especially, when welding work pieces having comparatively complex three-dimensional contours this greatly simplifies and reduces the overall cost for accomplishing the weld. Due to the generally great forces and especially the great pressing forces applied by the shoulder to the work pieces, such fixed supports need to closely follow the contours of the work pieces along the entire weld. In case there exists a gap between the support and a work piece, this work piece runs the risk of collapsing or breaking since the work pieces normally not per se may sustain the great pressing forces. Further, if the work pieces are not fully supported and immobilized along the entire weld, the control of the applied pressing force is made more difficult. Such fixed supports therefore need to be specially designed and manufactured for every work piece geometry, which naturally adds to the costs and complexity of the FSW process.

By arranging the supporting means with a support member which allows relative movement between the work pieces and the support member, the support member and/or the work pieces may be moved such that the support member always supports a portion of the work pieces to which portion the pressing force is momentarily applied. By this means the force absorbing area of the support member may be dimensioned independently of the dimensions and geometry of the work pieces. Especially, it is possible to utilise a force absorbing area of the support member, which is much smaller than the corresponding area of the work pieces along the entire length of the weld. Also, the geometry of the force absorbing area of the support member may be formed independently of the geometry of the work pieces along the entire weld. This makes possible to utilise a comparatively small support member having a simple geometry. It should be noted that, according to the invention, either the rotary tool and the support member may be moved while keeping the work piece stationary or the rotary tool and the support member may be kept stationary while moving the work piece. It is also possible to move both the rotary tool and the support member as well as the work piece, as long as a process movement is effected between the rotary tool and the support member on the one hand and the work piece on the other hand.

For many applications, the portion of the work pieces which momentarily needs to be supported, is defined by and fixed in relation the position of the rotary tool. By moving the support member synchronous with the rotary tool, a simple means for directing the support member to the portion momentarily needing support is then achieved. For instance, for many applications the support member may be arranged for relative movement together with the rotary tool, in a manner that a force absorbing surface of the support is constantly positioned such that it intersects the rotational axis of the rotary tool at a distance from the shoulder, which distance corresponds to the thickness of the work pieces.

The support member may for some applications be arranged to slide along the work pieces. However, due to the great pressing forces normally required, the friction between the support member and the work pieces will be considerable. In order to reduce the force needed for accomplishing the relative movement between the work pieces on the one hand and the rotary tool and support member on the other, the support member preferably comprises a rotary member, which is arranged to abut and roll along a surface of the work piece, which surface is opposite to the work piece surface which is in contact with the shoulder of the rotary tool. The rotary member may conveniently be formed as a cylinder. Other rotational symmetrical bodies, such as cones or spheres may also be used where the geometry of the work pieces makes such forms suitable.

I order to further reduce the force needed for moving the rotary tool and the support relative to the work pieces, the system preferably comprises means for driving the rotation of the rotary member. Such means may comprise a preferably geared electric or hydraulic motor.

In order to achieve a larger supporting area, the supporting means may comprise a plurality of rotary members. By arranging an endless track around at least two of the rotational members an even larger supporting area may be accomplished. By this means it might for some applications be sufficient to simply place the work pieces clamed together on the endless belt, whereby any additional support means may be omitted.

At least one support member may be displaceable in a direction other than the direction of the movement along the weld path. By this means the support member is allowed to follow and be displaced by the contour of the work pieces, when the work pieces exhibit a three dimensional geometry. If a leading support member is displaceable in such a manner, the displacement may be detected and utilised for controlling e.g. axial movement of the rotary tool in relation to the geometry of the work pieces. The detected displacement may also be used for controlling a manipulator of an industrial robot, which holds and moves the work pieces.

The rotary tool and the support member may be fixed to a common rigid structure. Especially if the work pieces are kept stationary while the rotary tool and the support member are moved this embodiment entail advantages. In such case it is sufficient to drive and control the movement of only one single unit to thereby accomplish synchronous movements of both the rotary tool and the support member.

The rigid structure may be formed with a general C- or U-shape, the rotary tool and the support member being arranged at opposite ends of the rigid structure. By this means a comparatively simple and stable structure is accomplished, which structure further allows for work pieces having a considerable width to be inserted between the rotary tool and the support member.

The rigid structure is preferably fixed to a manipulator of an industrial robot. By this means an efficient, precise and comparatively inexpensive means for allowing the rotary tool and the support member to be moved along comparatively complex three-dimensional patterns is achieved.

Alternatively, the rotary tool may be fixed to a first manipulator of an industrial robot and the support member to a second manipulator of an industrial robot. This embodiment may be used e.g. when welding very large work pieces. It further allows for even more complex three-dimensional movements of the rotary tool and the support member. The rotary tool and the support member may also at this embodiment be moved independently of each other if so would be desirable.

The invention also relates to a method of frictional stir welding of at least one work piece as set out in claim 13. The method comprises to effect a relative movement between the work piece and a rotary tool, along a weld path. The method is characterized by effecting a relative movement between the work piece and a support member for supporting the work piece, which relative movement is synchronous with the relative movement between the work piece and the rotary tool, along the weld path.

Further embodiments of the method are set out in the depending claims 14-20.

The different embodiments of the method accomplish the same advantages as the system according to the corresponding embodiments of the system described above.

Depending on the application the method may comprise different ways of creating the relative movements and holding the rotary tool, the support member and the work pieces. For example, one embodiment of the method comprises moving the rotary tool and the support member while keeping the work piece stationary.

Alternatively, the work piece could be moved while keeping the rotary tool and the support member stationary. For some applications with complex geometries, it may also be suitable to move all three of the work piece, the rotary tool and the support member.

According to one embodiment of the method, the rotary tool and the support may be held by a common manipulator of an industrial robot. Alternatively the rotary tool may be held by a first and the support by a second manipulator. The work piece may be held and possibly moved by a third manipulator of an industrial robot. Several third manipulator may also be used for holding and possibly moving the work piece.

Further objects and advantages of the system and the method according to the invention will be apparent from the following detailed description and the appending claims.

### Brief description of the drawings

By way of example, the invention will now be described in greater detail with reference to the accompanying drawings in which:
Fig. 1 is a schematic elevation view with a partial cross section illustrating the underlying principle of the invention.
Fig. 2 is a schematic drawing corresponding to fig. 1 and showing some further details of one embodiment of the system according to the invention.
Fig. 3a and 3b is a schematic front elevation view and a schematic side elevation view illustrating a system and a method according to second embodiment.
Fig. 4 is a schematic side elevation view illustrating a system and a method according to a third embodiment.
Fig. 5 is a schematic side elevation view illustrating a system and a method according to a fourth embodiment.
Fig. 6, 7, 8 and 9 are schematic drawings illustrating the support members of a system according to different embodiments.

### Description of preferred embodiments

In the following description and in the drawings the same and corresponding details are given the same reference numbers.

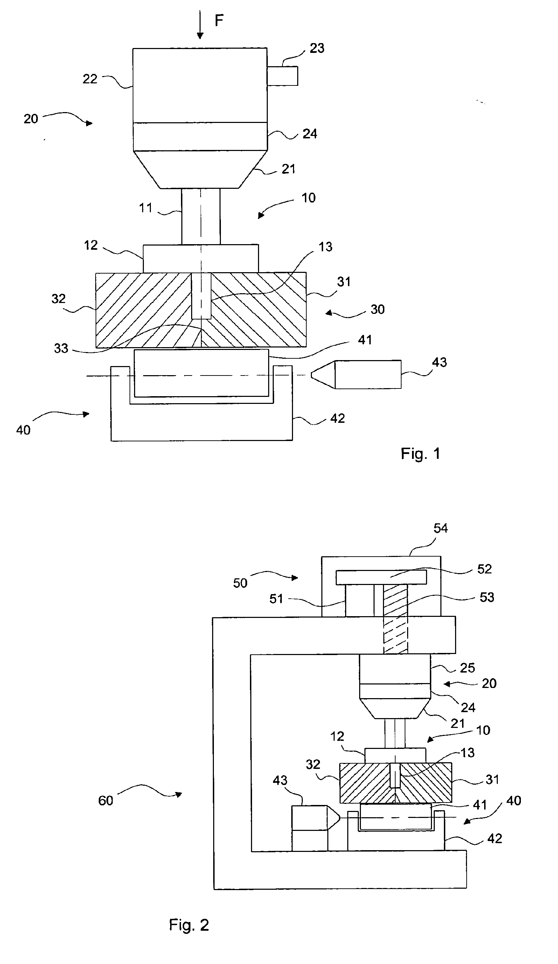

In fig. 1 some parts of a system for friction stir welding according to the invention are illustrated. The system comprises a rotary tool 10, a drive unit 20 for rotating the rotary tool 10 and a support 40 for supporting two work pieces 31, 32 which are to be welded together to form a one piece product 30. In figs. 1, 2, 3b, 4, 5, 8 and 9 the cross sections of the work pieces are shown.

The rotary tool is fixed to a spindle 21, which is connected to an angular gear 22 connected by an axle 23 to an electric motor (not shown in fig. 1). The rotary tool 10 comprises a shaft 11, a shoulder 12 and a probe 13. The drive unit 20 and the rotary tool 10 are pressed by a comparatively great force F towards the work pieces 31, 32, such that a lower surface of the shoulder 12 abuts a first surface of both work pieces 31, 32. A six-axis force sensor 24 is arranged between the spindle 21 and the gear 22 in order to detect the force by which the rotary tool 10 is pressed against the work pieces 31,32. The work pieces 31, 32 are pressed toward each other by clamping means (not shown) such that they contact each other along a vertical contact area 33 which extends in the longitudinal direction of the work pieces.

The probe 13 is inserted in-between the work pieces 31, 32. The probe 13 protrudes from the lower surface of the shoulder 12 to a distance, which corresponds to the depth of the weld to be formed.

By pressing and rotating the rotational tool 10, the contact between the materials of the work pieces 31, 32 on the one hand and the probe 13 and shoulder 12 on the other hand generates heat, which is transferred to the surrounding material of the work pieces. The heat causes the surrounding material to be plasticized. As the drive unit 20 and the rotary tool 10 are moved relative to the work pieces along a weld path, which runs along the contact surface 33, plasticized material is transferred from the leading side of the probe to it's trailing side. During and after this transfer, the material is confined to the so formed weld zone by the shoulder 12.

According to the invention the support 40 comprises a support member, arranged to be moved relative to the work pieces 31, 32. The support member is formed of a cylindrical roll 41, which is journalled in bearings to a rigid bracket 42. The cylindrical roll is further connected to a geared electric motor 43, for driving the rotation of the roll 41. The speed of the motor 43 is controlled such that the peripheral speed of the roll 41 is essentially equal to the speed by which the support 40 with the roll 41 is moved in relation to the work pieces 31, 32. This speed of the support is also equal to the speed by which the rotary tool moves along the weld path, relative to the work pieces.

In fig. 1 it is not indicated how the relative movement of the rotary tool 10, the support 40 and the work pieces 31, 32 is accomplished. It is however realized that such relative movement could be achieved either by maintaining the work pieces 31, 32 stationary and moving the drive unit 20 with the rotary tool 10 and the support 40 or vice versa. Relative movement could also be achieved by moving all of the drive unit with rotary tool, the support and the work pieces. In such a case the speed and/or direction of the work pieces needs to be different from that of the support and the drive unit with rotary tool.

Fig. 2 illustrates an embodiment which is best suited for keeping the work pieces 31, 32 stationary, while moving the drive unit 20 with rotary tool 10 and the support 40. According to this embodiment the drive unit 20 comprises a axial geared electric motor 25. Axial movement and pressure control of the drive unit 20 and the rotary tool 10 is achieved by a pressure control device 50. The pressure control device 50 comprises an electric motor 51, which by means of a gear 52 drives a threaded screw 53 for rotation. The threaded screw 53 engages and cooperates with a corresponding nut member (not shown) which is fixed to the drive unit 20. By rotating the motor 51 in either rotational direction the drive unit 20 is displaced axially towards or away from the work pieces, 31, 32. By this means it is possible both to adjust the pressing force of the shoulder 12 and the axial position of the rotary tool in order to allow for work pieces having varying thickness to be welded.

The system illustrated in fig. 2 further comprises a rigid structure 60 to which the support 40 and the pressure control device 50 is fixed. The rigid structure 60 is generally C-shaped. The pressure control device 50 and thereby the drive unit 20 and the rotary tool 10 is fixed by means of a bracket 54 at an upper end portion of the rigid structure. The support 40 comprising the cylindrical roll 41, the bracket 42 and the motor 43 is fixed to a lower end portion of the rigid structure.

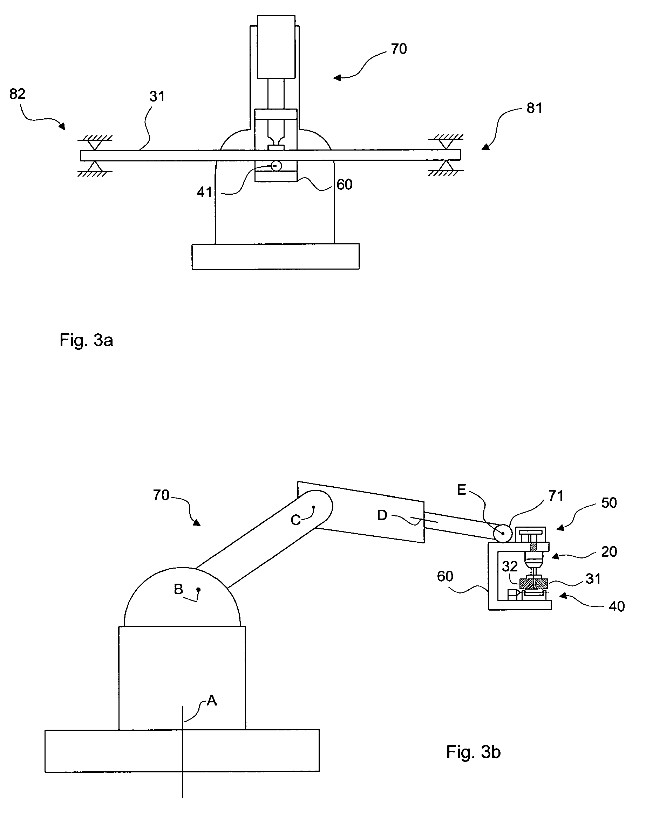

As indicted in figs. 3a and 3b the rigid structure 60 is attached to and carried by a wrist 71 of a manipulator 70 of an industrial robot. The manipulator 70 comprises five axes A-E about which axes the robot parts may move relative to each other.

As best seen in fig. 3a the work pieces 31, 32 are kept stationary during welding by means of stationary clamping devices 81, 82, while the rigid structure 60 with the rotary tool 20 and the support 40 is carried by the manipulator and moved along the work pieces.

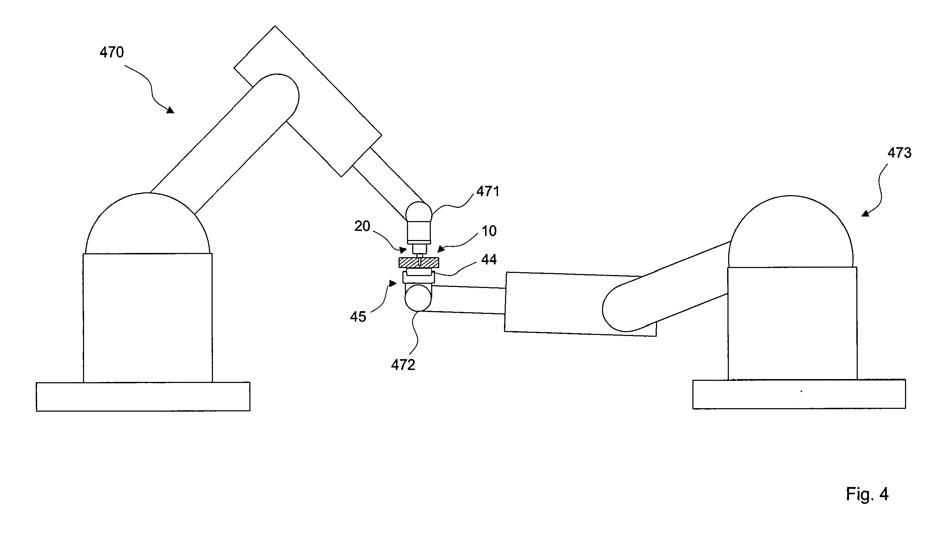

Fig. 4 illustrates a system and a method according to a further embodiment of the invention. At this embodiment the rotary tool and drive unit are carried by the wrist 471 of a first five axes manipulator 470, while a support 45 with a cylindrical roll 44 is attached to and carried by the wrist 472 of a second manipulator 473. The first 470 and second 473 manipulators are controlled by a single common control unit (not shown). The work pieces are held by a stationary clamping device (not shown).

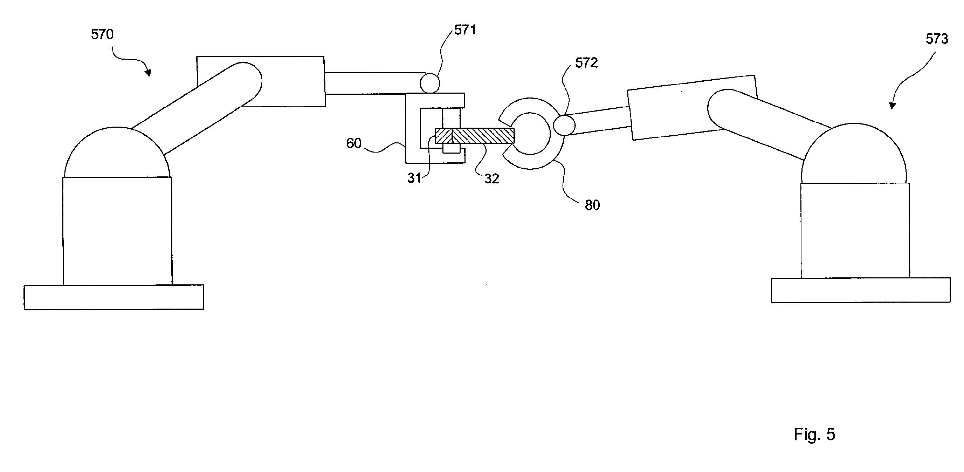

Fig. 5 illustrates a system and a method according to a still further embodiment of the invention. At this embodiment the rigid structure 60, to which the support 40, the drive unit 20 and the rotary tool 10 are fixed (see fig. 2), is carried by the wrist 571 of a first manipulator 570, just as illustrated in figs. 3a, 3b. The work pieces 31, 32 are held by a clamping device 80, which is attached to an carried by the wrist 572 of a second manipulator 573.

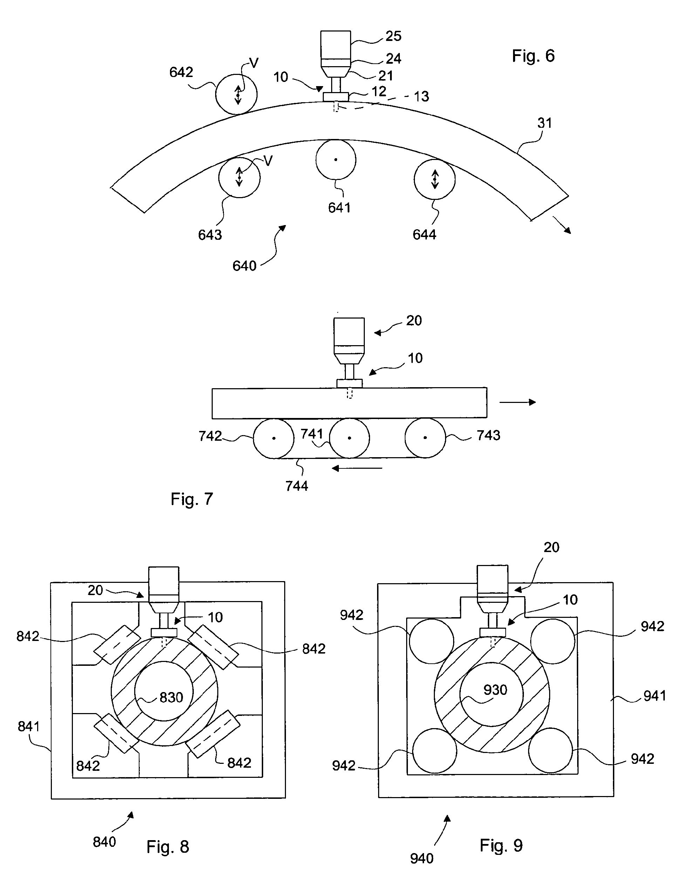

In figs. 6-9 different arrangements of the support are illustrated. The support 640 shown in fig. 6 comprises four cylindrical rolls 641, 642, 643, 644. A central roll 641 is arranged such that its rotational axis intersects the rotational axis of the rotary tool 10, to thereby absorb the most of the pressing force applied by the shoulder 12. An upper 642 and a lower 643 leading roll are arranged such that they may be displaced in a vertical direction V which is essentially perpendicular to their respective rotational axis. Also a lower trailing roll 644 is arranged displaceable in a vertical direction, which is perpendicular to its rotation axis. By this means the support 640 may be moved in relation to and along the work pieces 31, having comparatively complex three- dimensional geometries. The vertical displacement of the leading rolls 642 and 643 may further be detected for calculating the geometry of the portions of work pieces approaching the rotary tool and to adjust the axial position of and the pressure applied by the rotary tool 10 in relation thereto.

In fig. 7 a support 740 comprising three cylindrical rolls 741, 742 and 743 is illustrated. An endless track 744 is arranged around the rolls in order to provide a larger force absorbing area of the support. The rotation of at least one 742 of the rolls may be driven.

Figs. 8 and 9 illustrates supports 840 and 940 which may be used especially when friction stir welding work pieces 830 and 930 having hollow, such as annular, cross sections. The supports comprises a square frame member 841, 941 at which the drive unit 20 and the rotary tool 10 are fixed. The support of 840 fig. 8 further comprises four support rolls 842 supported by the frame 841 and arranged symmetrically for supporting the hollow work piece 830 to thereby prevent deformation of the work piece during welding.

The support 940 of fig. 9 differs from the one of fig. 8 in that the support rolls are exchanged by spherical balls 942 which are supported by the frame 941. One or several of the support rolls 842 as well as of the support balls 942 may be arranged to be driven for rotation by any suitable drive means.

Above exemplifying embodiments of the system and method according to the invention have been disclosed. The invention is however nor limited to these embodiments, but may be varied within the scope of the claims. Especially, details and features of the different embodiments may be applied also to the other embodiments when found suitable and desirable. In the illustrated exemplifying embodiments the work pieces are joined by a so-called square butt joint. The system and method according to the invention may however also be used for forming many other types of joint geometries, such as combined butt and lap, single lap, multiple lap, 3 piece T butt, 2 piece T butt, edge butt and possible corner fillet weld.

## Claims

1. System for friction stir welding of at least one work piece (30, 31, 32), comprising a rotary tool (10) arranged to move relative to the work piece along a weld path, and means for supporting the work piece during welding, **characterized in that** the supporting means comprises a support member (41, 641-644, 741-743, 842, 942) arranged to move synchronously with the rotary tool (10) relative to the work piece.

2. System according to claim 1, wherein the support member comprises a rotary member (41, 641-644, 741-743, 842, 942), which is arranged to contact and roll along the work piece (31, 32).

3. System according to claim 2, comprising means (43) for driving the rotation of the rotary member (41).

4. System according to claim 2 or 3, wherein the rotary member (41, 641-644, 741-743, 842, 942) is cylindrical, conical or spherical.

5. System according to any of claims 1-4, wherein the supporting means comprises a plurality of rotary members (641-644, 741-743, 842, 942).

6. System according to any of claims 2-5, wherein at least one support member (642-644) is displaceable in a direction towards and away from the weld path.

7. System according to claim 6, comprising means for detecting the displacement of the at least one support member (642-644) towards and away from the weld path and means for controlling the movement of the rotary tool in relation to such displacement of the support member.

8. System according to any of claim 5-7, wherein an endless track (744) is arranged around at least two of the rotary members (721-743).

9. System according to any of claims 1-8, wherein the rotary tool (10) and the support member (41, 842, 942), are fixed to a common rigid structure (60, 841, 941).

10. System according to claim 9, wherein the rigid structure (60) has a general C- or U-shape, the rotary tool (10) and the support member (41) being arranged at opposite ends of the rigid structure.

11. System according to claim 9 or 10, wherein the rigid structure (60) is fixed to a manipulator (70, 570) of an industrial robot.

12. System according to any of claims 1-8, wherein the rotary tool (10) is fixed to a first manipulator (470) of an industrial robot and the support member (44) is fixed to a second manipulator (473) of an industrial robot.

13. Method for frictional stir welding of at least one work piece, comprising effecting a relative movement between the work piece (30, 31, 32) and a rotary tool (10), along a weld path, **characterized by** effecting a relative movement between the work piece and a support member (41, 641-644, 741-743, 842, 942) for supporting the work piece, which relative movement is synchronous with the relative movement between the work piece and the rotary tool, along the weld path.

14. Method according to claim 13, comprising driving a rotary member (41, 742) of the support member for rotation.

15. Method according to claim 13 or 14, comprising detecting a displacement of the support member in a direction towards and away the weld path and controlling the movement of the rotary tool in relation to such displacement.

16. Method according to any of claims 13-15, comprising moving the rotary tool (10) and the support member (41) while keeping the work piece (31) stationary.

17. Method according to any of claims 13-15, comprising moving the work piece while keeping the rotary tool and the support stationary.

18. Method according to any of claims 13-17, comprising holding the rotary tool (10) and the support member (41) by a manipulator (70, 570) of an industrial robot.

19. Method according to any of claims 13-17 comprising holding the rotary tool (10) by a first manipulator (470) of an industrial robot and holding the support member (44) by a second manipulator (473) of an industrial robot.

20. Method according to any of claim 13-19, comprising holding the work piece by at least one manipulator (573) of an industrial robot.

21. Method according to any of claim 13-19, comprising holding the work piece (31) by at least one stationary clamping device (81, 82).
